# EUROPÄISCHE PATENTSCHRIFT

(11) **EP 1 404 560 B1**
(45) Veröffentlichungstag und Bekanntmachung des Hinweises auf die Patenterteilung: **03.08.2005**
(21) Anmeldenummer: 02758245.1
(22) Anmeldetag: 19.06.2002
(51) Int. Cl.: B60T 15/14, B60T 13/66, B60T 7/04

(54) **KOMBINIERTE ELEKTRO-PNEUMATISCH UND MECHANISCH BETÄTIGBARE VENTILBAUEINHEIT UND STEUERVORRICHTUNG FÜR EIN BREMSSYSTEM**
COMBINED ELECTRO-PNEUMATICALLY AND MECHANICALLY ACTUATABLE VALVE ASSEMBLY AND CONTROL DEVICE FOR A BRAKE SYSTEM
ENSEMBLE SOUPAPE COMBINE A COMMANDE ELECTROPNEUMATIQUE ET MECANIQUE ET DISPOSITIF DE COMMANDE POUR UN SYSTEME DE FREINAGE

(30) Priorität: 20.06.2001 DE 10129604
(43) Veröffentlichungstag der Anmeldung: 07.04.2004
(73) Patentinhaber: KNORR-BREMSE SYSTEME FÜR NUTZFAHRZEUGE GMBH, 80809 München (DE)
(72) Erfinder: RÖTHER, Friedbert, 74389 Cleebronn (DE); HERGES, Michael, 70825 Korntal-Münchingen (DE)
(74) Vertreter: Schönmann, Kurt, Dr.
(86) Internationale Anmeldenummer: PCT/EP2002/006732
(87) Internationale Veröffentlichungsnummer: WO 2003/000530

(56) Entgegenhaltungen:
- DE-A- 2 937 657
- DE-A- 4 232 492
- DE-A- 19 653 264
- DE-A- 19 746 342
- DE-A- 19 815 440
- DE-A- 19 852 399
- HANS-PETER KLUG: "Nutzfahrzeug-Bremsanlagen" 1989 , NUTZFAHRZEUG - BREMSANLAGEN. AUFBAU UND FUNKTION PRUF - UND WARTUNGSARBEITEN, VOGEL-BUCHVERLAG , WÜRZBERG (DE) XP002213486 157820 Seite 41 -Seite 42; Abbildungen 2.30,2.31

## Beschreibung

Die Erfindung betrifft eine kombinierte elektro-pneumatisch und mechanisch betätigbare Ventilbaueinheit für Bremssysteme für mindestens zwei Bremskreisen gemäß dem Oberbegriff von Anspruch 1; ferner eine Steuervorrichtung für ein Bremssystem, insbesondere ein Fahrzeugbremssystem gemäß dem Oberbegriff von Anspruch 13.

Bremseinrichtungen für Fahrzeuge sind hinsichtlich ihres Aufbaus und der Funktionsweise in unterschiedlichen Ausführungen bekannt. Eine gattungsgemäße Ventilbaueinheit für ein Fahrzeugbremssystem ist aus der DE 198 52 399 A1 bekannt. Des weiteren wird auf die DE 197 46 342 A1 verwiesen, welche eine druckmittelbetätigte Fahrzeugbremsanlage offenbart, mit wenigstens einem ersten, der Hinterachse des Fahrzeuges zugeordneten Bremskreis und einem zweiten, der Vorderachse des Fahrzeuges zugeordneten Bremskreis. Dabei sind dem ersten Bremskreis als auch dem zweiten Bremskreis je zwei Bremszylinder und je eine Steuerventileinrichtung zugeordnet, über welche die Bremszylinder in Abhängigkeit von einem Steuerdruck mit einer dem jeweiligen Bremskreis zugeordneten Druckmittelquelle oder mit einer Druckmittelsenke verbindbar sind. Zur Steuerung des an den Bremszylindern anliegenden Druckes sind in der Regel Steuereinrichtungen vorgesehen, welche den einzelnen Bremskolben zugeordnet werden. Die Steuerung des Druckes an den Bremszylindern erfolgt dabei elektro-pneumatisch und zusätzlich zur Gewährleistung einer sicheren Betriebsweise bei Ausfall der Elektronik rein pneumatisch. Die Betätigung im letztgenannten Fall erfolgt bekanntermaßen mechanisch. Dazu ist ein mit einem Bremswertgeber koppelbares Betätigungselement vorgesehen, über welches der Fahrer einen Wunsch nach Verzögerung beziehungsweise Erzeugung eines Bremsmomentes abgibt. Aus dem Fahrerwunsch wird ein entsprechendes Signal generiert, welches einem Eingang einer Steuereinrichtung zugeführt wird. In der Steuereinrichtung wird der am Bremszylinder aus dem Fahrerwunsch resultierende erforderliche Druck berechnet und mindestens ein Stellsignal zur Ansteuerung einer Einrichtung zur Erzeugung beziehungsweise Bereitstellung des Druckes erzeugt.

Der dabei im Bremszylinder erforderliche bereitzustellende Druck wird mittels einem separaten Gerät, dem sogenannten Druckregelmodul erzeugt. Dieses umfaßt eine Steuerkammer und eine Arbeitskammer, wobei die Steuerkammer mit einer Druckmittelquelle gekoppelt ist, während die Arbeitskammer mit dem Bremszylinder wenigstens mittelbar verbunden ist. Für den Fall des Ausfalls der Elektronik müssen beide Bremskreise auch rein pneumatisch betätigbar sein. Diese rein pneumatische Betätigungseinrichtung ist dabei derart ausgebildet, daß dieses ein Betriebsbremsventil mit mindestens einer Arbeitskammer umfaßt, die ebenfalls mit dem Bremszylinder gekoppelt ist. Die Betätigung erfolgt über das Betätigungselement, insbesondere weg- oder druckabhängig.

Bei Ausführungen von Bremssystemen mit zwei Bremskreisen, von denen im Normalbetrieb einer elektro-pneumatisch betätigt wird und die im Notbetrieb bei Ausfall der Elektronik beide pneumatisch betätigt werden, kann es sinnvoll sein, wenn der zweite pneumatische Bremskreis immer von einem der anderen Kreise, dem ersten elektro-pneumatischen Bremskreis oder dem ersten pneumatischen Bremskreis gesteuert wird. Um auch bei Drucklosigkeit im ersten Druckkreis den zweiten Druckkreis noch betätigen zu können, muß der zweite Kreis in diesem Fall mechanisch durchgesteuert werden können.

In der Fahrzeugindustrie ist es dabei üblich, die einzelnen Komponenten der Bremsanlage oder andere Systeme speziell auf die entsprechenden Einsatzerfordemisse einzelner Fahrzeugtypen anzupassen beziehungsweise abzustimmen, mit dem Ziel, das Einsatzverhalten dieser Fahrzeuge zu optimieren. Dazu ist es erforderlich, zahlreiche Varianten für Einzelkomponenten zu produzieren und vorzuhalten, welche dann entsprechend den Einsatzerfordemissen miteinander zu kombinieren sind. Dies bedeutet erheblich höhere Lagerhaltungskosten. Des weiteren bedingt die Kopplung der einzelnen Elemente einen höheren Leitungs- und Verkabelungsaufwand, welcher wiederum eine Fehlerquelle darstellen kann.

Der Erfindung liegt daher die Aufgabe zugrunde, eine kombinierte elektropneumatisch und mechanisch betätigbare Ventilbaueinheit für ein Bremssystem eines Fahrzeuges derart weiterzuentwickeln, daß neben einer Verringerung der Anzahl einzelner Bauelemente der zur Verfügung stehende Bauraum noch optimaler ausnutzbar ist und der Installationsaufwand für die elektrischen und pneumatischen Verbindungen eine erhebliche Reduktion erfährt. Des weiteren ist eine Senkung der Lagerhaltungskosten mit einfachen Mitteln anzustreben, wobei ein hoher Grad an Standardisierung erzielt werden soll. Dabei sind die Sicherheitsanforderungen bekannter Systeme mit separaten Geräten zu erfüllen. Insbesondere ist eine Möglichkeit der mechanischen Durchsteuerung zu schaffen, bei welcher auch bei Drucklosigkeit der anderen Druckkreise der zweite pneumatische Kreis noch betätigt werden kann. Die erfindungsgemäße Lösung soll sich dabei durch einen geringen konstruktiven Aufwand auszeichnen.

Die erfindungsgemäße Lösung ist durch die Merkmale des Anspruchs 1 charakterisiert. Vorteilhafte Ausgestaltungen sind in den Unteransprüchen wiedergegeben.

Erfindungsgemäß wird die Aufgabe durch Verwendung einer kombinierten elektropneumatisch und mechanisch betätigbaren Ventilbaueinheit für Bremssysteme mit mindestens zwei Bremskreisen gelöst, wobei ein erster elektro-pneumatischer Bremskreis im Normalbetrieb elektropneumatisch betätigt wird und zur Sicherheit bei Ausfall der Elektronik zusätzlich auch pneumatisch betätigt werden kann und ein zweiter Bremskreis ausschließlich pneumatisch betätigt wird. Die Ventilbaueinheit weist folgende Merkmale auf :
- Eine in einer ersten Kammer eines Gehäuses angeordnete erste Ventileinrichtung für den ersten elektro-pneumatisch betätigten Bremskreis und den ersten pneumatischen Bremskreis und eine zweite, in einer dritten Kammer des Gehäuses angeordnete Ventileinrichtung für den zweiten pneumatischen Bremskreis ist vorgesehen;
- die erste Ventileinrichtung für den ersten elektro-pneumatisch betätigten Bremskreis, der bei Ausfall der Elektronik als pneumatischer Bremskreis betrieben wird, umfasst
   - eine Arbeitskammer und eine Steuerkammer;
   - einen Anschluss zur Kopplung mit einer Druckmittelquelle oder Druckmittelsenke und einen Anschluss zur Kopplung der Arbeitskammer mit mindestens einem Betriebsbremszylinder;
   - ein indirekt über weitere Übertragungselemente oder direkt mit einer Betätigungseinrichtung koppelbares Ventilsitzelement und ein Ventilglied, welches entsprechend seiner Funktionsstellung die Verbindung zwischen der Arbeitskammer und dem Anschluss zur Kopplung mit einer Druckmittelquelle oder Druckmittelsenke frei gibt oder versperrt, wobei
   - das Ventilsitzelement und das Ventilglied koaxial zueinander im Gehäuse angeordnet und in Richtung der Längsachse des Gehäuses zueinander verschiebbar sind;
   - dem Ventilsitzelement und dem Ventilglied Anschläge zur Begrenzung von deren Verschiebbarkeit im Gehäuse zugeordnet sind;
- die zweite Ventileinrichtung umfasst
   - eine Steuerkammer und eine Arbeitskammer;
   - ein Ventilsitzelement und ein Ventilglied, die koaxial zueinander angeordnet und in Richtung der Längsachse des Gehäuses zueinander verschiebbar sind;
   - einen Anschluss zur Kopplung mit einer Druckmittelquelle oder Druckmittelsenke und einen Anschluss zur Kopplung mit einem Betriebsbremszylinder, wobei das Ventilglied zwischen dem Anschluss zur Kopplung mit einer Druckmittelquelle oder Druckmittelsenke und der Arbeitskammer angeordnet ist; wobei
- die Arbeitskammer der ersten Ventileinrichtung mit der Steuerkammer der zweiten Ventileinrichtung verbunden ist;
- das Ventilsitzelement der zweiten Ventileinrichtung im Gehäuse geführt und mit dem Betätigungselement direkt oder über Übertragungselemente zur Verschiebung in Wirkverbindung bringbar ist.

Die erfindungsgemäße Lösung ermöglicht es, daß mit einem Gerät mit einer minimalen Bauteilanzahl, geringem konstruktiven und fertigungstechnischen Aufwand eine Vielzahl verschiedener Betriebsweisen möglich sind, wobei die Bereitstellung der Bremswirkung auch bei Druckausfall eines Kreises gesichert wird. Die Ventilbaueinheit zeichnet sich dabei durch einen hohen Grad an Kompaktheit, eine geringe Anzahl von Bauelementen bei optimaler Ausnutzung dieser in den unterschiedlichen Betriebsweisen und geringen Bauraumbedarf aus. Erforderliche Verbindungsleitungen können auf ein Minimum reduziert werden.

Bezüglich der konkreten konstruktiven Ausführungen der einzelnen Elemente bestehen eine Vielzahl von Möglichkeiten. Vorzugsweise werden jedoch Ausführungen der Einzelelemente gewählt, die sich durch eine konstruktiv einfache Gestaltung und hinsichtlich der Belastung optimale Auslegung auszeichnen.

In einer besonders vorteilhaften Ausgestaltung der kombinierten elektro-pneumatisch und mechanisch betätigbaren Ventilbaueinheit ist das Ventilglied der ersten Ventileinrichtung als Manschettenteil ausgebildet. Das Ventilglied der ersten Ventileinrichtung umfaßt dabei einen Doppelkolben mit zwei druckdichten im Gehäuse geführten Kolbenteilen und integrierter Verbindungsleitung und/oder einem zwischen den Kolbenteilen gebildeten Zwischenraum und mindestens eine, zwischen beiden Kolbenteilen angeordnete und an einem Kolbenteil koaxial zu diesem angeordnete Manschette zur wahlweisen Freigabe oder Verschluß der Verbindung zwischen dem Anschluß zur Druckmittelquelle und dem Arbeitsraum, welche entweder
a) parallel zu diesem Kolbenteil verschiebbar geführt ist oder
b) fest am Kolbenteil angelenkt und um den Anlenkpunkt verschwenkbar oder auslenkbar ist.

Der Doppelkolben kann dabei einteilig als integrale Baueinheit mit eingearbeitetem Zwischenraum oder mehrteilig ausgeführt sein, wobei im letztgenannten Fall die Baueinheit des Doppelkolbens durch Montage erstellt wird.

Die Ausführung des Ventilgliedes der ersten Ventileinrichtung als Manschettenteil in Form eines Doppelkolbens bietet den Vorteil, daß mit einfachen Mitteln neben der wahlweisen Absperrung oder Freigabe der Verbindung zwischen Druckmittelquelle und Arbeitskammer gleichzeitig eine sichere und druckdichte Trennung zwischen Arbeitskammer und Steuerkammer ohne zusätzlich erforderliche Elemente erfolgt.

Vorzugsweise ist dabei zwischen Manschette und einem Kolbenteil, vorzugsweise dem Kolbenteil an welchem die Manschette geführt ist, eine Federeinheit vorgesehen, welche bei Betätigung der Manschette, das heißt Verschiebung oder Auslenkung der Manschette bei Verschiebung des Manschettenteils gegenüber dem Ventilsitz oder Verschiebung des Ventilsitzes gegenüber dem Manschettenteil und Kontakt zwischen Ventilsitz und Manschette vorgespannt oder weiter vorgespannt wird und im unbelasteten Zustand der Manschette eine Zurückstellung der Manschette in eine Position, welche eine Abdichtung der Arbeitskammer gegenüber dem Druckmittelanschluß ermöglicht, bewirkt. Entsprechend der konstruktiven Auslegung der Einzelelemente, insbesondere der Manschettengröße des Ventilsitzes, der Federeinheit etc. kann somit immer eine sichere Unterbrechung der Druckmittelbeaufschlagung der Arbeitskammer im nicht betätigten Zustand des Bremssystems erzielt werden.

Der Doppelkolben kann derart im Gehäuse integriert sein, daß der erste Kolbenteil mit seiner zur äußeren Gehäuseinnenwand gerichteten Stirnseite die Steuerkammer und der zweite Kolbenteil die Arbeitskammer begrenzen. Erster und zweiter Kolbenteil sind im Gehäuse druckdicht geführt. Die druckdichte Führung beider Kolbenteile erfolgt vorzugsweise an den äußeren Gehäuseinnenwänden, so daß die einzelnen Kammern eine optimale Abdichtung zwischen Anschluß zur Kopplung mit einer Druckmittelquelle und dem Ventilglied erfahren. Das erste Kolbenteil wird desweiteren druckdicht an einer inneren Gehäusewand, welche vorzugsweise zentral im Gehäuseinneren angeordnet ist, geführt. Die innere Gehäusewand ist dabei vorzugsweise ebenfalls koaxial zu den übrigen Elementen. Das zweite, hinsichtlich seiner Abmessungen, insbesondere der Erstreckung von der äußeren Gehäuseinnenwand zur Gehäusemitte, zum ersten Kolbenteil unterschiedlich ausgeführte Kolbenteil erfährt seine druckdichte Führung im Gehäuse über die Koppelung mit dem ersten Kolbenteil. Die Manschette ist zwischen erstem und zweitem Kolbenteil angeordnet und ermöglicht den wahlweisen Verschluß oder die Freigabe des zwischen beiden gebildeten Zwischenraums oder der Verbindungsleitung gegenüber der Arbeitskammer. Diese Lösung bietet den Vorteil, daß das den Ventilsitz tragende Element hinsichtlich seiner Breite sehr klein gebaut werden kann und dementsprechend die die Druckkräfte übertragenden Elemente nur einen geringen Hebelarm aufweisen müssen, was bei der Auslegung im Werkstoffwahl zur positiven Effekten hinsichtlich des Gewichtes und der Kosten führen kann.

Unter einem weiteren Aspekt der Erfindung wird vorzugsweise der von der inneren Gehäusewand vom Gehäuse abgetrennte Teil mit einer Öffnung versehen, welche als Entlastungsöffnung genutzt werden kann. Die innere Gehäusewand erstreckt sich dabei vorzugsweise röhrenförmig in die Kammern der ersten und zweiten Ventileinrichtung. Die einzelnen Elemente der Ventileinrichtungen, Ventilsitzelement und Ventilglied sind koaxial zu diesem ausgeführt. Das Ventilglied wird dabei direkt an der Gehäusewand geführt.

Die zweite Ventileinrichtung ist in Einbaulage betrachtet unter oder oberhalb oder neben der ersten Ventileinrichtung angeordnet. Vorzugsweise sind beide Ventileinrichtungen in einem Gehäuse integriert, welches lediglich durch Zwischenwände in die entsprechenden Kammern unterteilt ist. Die erste und die zweite Ventileinrichtung sind bezüglich ihrer Wirkelemente - Ventilsitzelement und Ventilkolben koaxial zueinander geführt. Das Ventilsitzelement der zweiten Ventileinrichtung ist als Kolbenelement, vorzugsweise in Form eines Doppelkolbens ausgeführt, welcher druckdicht im Gehäuse geführt wird. Zu diesem Zweck ist die innere Gehäusewand bis in die zweite Kammer hinein verlängert ausgeführt und weist lediglich eine Unterbrechung im Bereich der theoretischen Verschiebbarkeit des Doppelkolbens auf. Die Anordnung der einzelnen Elemente der beiden Ventileinrichtungen erfolgt koaxial zu einer Achse, welche der theoretischen Verlängerung der Achse der Kraftwirkungsrichtung auf Grund der Betätigung des Betätigungselementes auf die Ventileinrichtung entspricht.
Der Doppelkolben der zweiten Ventileinrichtung weist dabei ein erstes Kolbenteil auf, welches den Ventilsitz trägt und ein zweites Kolbenteil, welches hauptsächlich der Führung im Gehäuse dient und mit einem Druck aus der Steuerkammer beaufschlagbar ist. Das erste Kolbenteil begrenzt dabei mit seiner zur Gehäuseinnenwand gerichteten Stirnfläche die Arbeitskammer, während das zweite Kolbenteil die Steuerkammer begrenzt. Die Beaufschlagung oder Versorgung der zweiten Ventileinrichtung erfolgt über den Druck aus dem elektropneumatisch oder mechanischpneumatisch ansteuerbaren ersten Bremskreis , welcher durch die erste Ventileinrichtung gesteuert wird. Um auch bei Druckausfall eine sichere Betätigung der zweiten Ventileinrichtung und damit eine Verschiebung oder Verschwenkung der Manschette als Ventilglied zur Freigabe der Verbindung zwischen dem Anschluß zu einer Druckmittelquelle und dem Arbeitsraum zu gewährleisten, sind Mittel zur mechanischen Drucksteuerung vorgesehen, welche eine Verlängerung des Ventilgliedes der zweiten Ventileinrichtung beinhalten, die koaxial zu den anderen Elementen angeordnet ist und zentral im Gehäuse geführt wird. Diese beinhaltet einen Anschlag, an dem das an der Ventileinrichtung wenigstens mittelbar wirksam werdende Betätigungselement bei entsprechender Größe der Pedalkraft wirksam wird. Dabei wird in einer besonders bevorzugten Ausführung die Verbindungsleitung bzw. der Verbindungskanal zum Entlastungsraum, welcher durch die innere Gehäusewand umschlossen wird, genutzt. Die Verlängerung wird dabei im wesentlichen bis zur Gehäusewand der ersten Ventileinrichtung geführt, so daß auch bei geringen Betätigungskräften eine direkte Durchsteuerung möglich ist.

Unter einem weiteren Aspekt der Erfindung wird vorteilhaft bei Kombination der Ventileinrichtungen bzw. Zusammenfassung in einer kombinierten elektropneumatisch und mechanisch betätigbaren Ventilbaueinheit jeweils entsprechend der Nutzung des Bremskreises der in der Arbeitskammer der ersten oder zweiten Ventileinrichtung erzeugte Druck zur Erzeugung der Gegenkraft am Bremspedal genutzt, in dem dieser Druck auf eine Kolbenfläche geleitet wird, welche der Bewegungsrichtung der Betätigung entgegenwirkt. Dazu ist im Gehäuse eine weitere dritte, von der ersten Kammer durch eine Zwischenwand getrennte Kammer vorgesehen, in der ein mit dem Betätigungselement koppelbarer Pedalkraftkolben angeordnet ist. Der Pedalkraftkolben ist dabei ebenfalls koaxial zu den einzelnen Ventilgliedern der Ventileinrichtungen angeordnet. Diese stützt sich über eine Federeinheit an der Zwischenwand ab. Die den Ventilsitz bildenden Elemente der ersten Ventileinrichtung und der zweiten Ventileinrichtung sind gegenüber dem Pedalkraftkolben verschiebbar geführt, wobei bei Kontakt zwischen Pedalkraftkolben und Ventilsitz über Mitnahme eine Zwangsbewegung des jeweiligen anderen Elementes - Ventilsitz oder Pedalkraftkolben - erzeugt werden kann.
Zur Erzielung eines Feedbacks über die erzielte Bremswirkung ist die Arbeitskammer der ersten Ventileinrichtung mit der dritten Kammer, in welcher der Pedalkraftkolben geführt ist, insbesondere der Druckkammer verbunden, beispielsweise über eine Verbindungsleitung zwischen Arbeitskammer und Druckkammer oder Öffnungen in der Zwischenwand. Durch die gezielte Auslegung der Flächenverhältnisse am Kolben besteht dabei die Möglichkeit, daß zur Erzeugung des Backabdrucks mehr, weniger oder gleichviel Kraft bei der mechanischen Betätigung aufgewendet werden muß, wie bei der elektrisch gesteuerten Bremsung, wobei die Auslegung der Flächenverhältnisse zur Ausbildung beliebiger Charakteristiken der Pedalkraft kundenspezifisch erfolgen kann.

Die erfindungsgemäß gestaltete kombinierte elektro-pneumatisch und mechanisch betätigbare Ventilbaueinheit ist erfindungsgemäß des weiteren Bestandteil einer Steuervorrichtung für ein Bremssystem. Die Steuervorrichtung umfaßt einen Bremswertgeber, eine Steuereinrichtung und die kombinierte Ventilbaueinheit mit integriertem Betriebsbremsventil und einem Druckregelmodul. Unter einem weiteren Aspekt der Erfindung sind diese einzelnen Elemente bzw. Baueinheiten zu einer zentralen Baueinheit in Form eines Zentralmoduls zusammengefaßt. Diese Zusammenfassung erfolgt dabei durch die räumlichen Anordnung der einzelnen Elemente Bremswertgeber, Steuereinrichtung und kombinierte Ventilbaueinheit. Für die Zusammenfassung der einzelnen Elemente zu einem Zentralmodul bestehen eine Vielzahl von Möglichkeiten.
Die einzelnen Elemente können dabei durch aneinander Flanschen ihrer Gehäuse oder Integration eine Mehrzahl von Komponenten in einem gemeinsamen Gehäuse oder Integration von Komponenten in einem gemeinsamen Gehäuse und anflanschen der restlichen Komponenten am gemeinsamen Gehäuse miteinander zu einer baulichen Einheit zusammengefaßt werden. Dies bietet den Vorteil, daß die Gesamtsteuervorrichtung für ein Bremssystem das wenigstens einem Betriebsbremszylinder zuordenbar ist, als selbständig handelbare Baueinheit ausführbar ist und der Aufwand für die erforderliche Verkabelung vor Ort am Fahrzeug erheblich reduziert werden kann, da die einzelnen Verbindungsleitungen - für Betriebsmittel und elektrische Verbindungsleitungen - bereits im Zentralmodul integriert sind. Die erforderliche Leitungslänge wird erheblich minimiert. Bezüglich der räumlichen Zuordnung der einzelnen Elemente zueinander bestehen ebenfalls eine Mehrzahl von Möglichkeiten, welche jedoch im Ermessen des zuständigen Fachmannes liegen.

Die erfindungsgemäße Lösung wird nachfolgend anhand einer Figur erläutert.

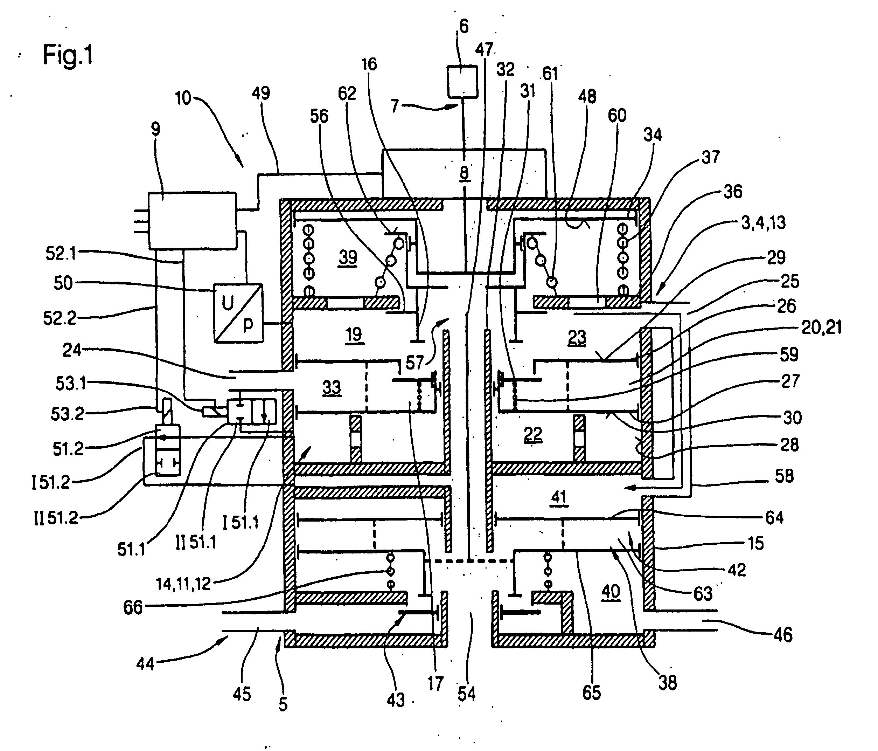

Figur 1 verdeutlicht in schematisch vereinfachter Darstellung den Grundaufbau einer Steuervorrichtung, insbesondere Drucksteuervorrichtung für ein Bremssystem, insbesondere ein Fahrzeugbremssystem, in Form eines Zentralmoduls mit einer erfindungsgemäß ausgeführten kombinierten elektro-pneumatisch oder mechanisch betätigbaren Ventilbaueinheit . Das Bremssystem umfaßt zwei Bremskreise - einen ersten elektro-pneumatisch betätigbaren Bremskreis 3 der zur Sicherheit bei Ausfall der Elektronik zusätzlich auch pneumatisch betätigt werden kann und einen zweiten rein pneumatisch betätigbaren Bremskreis 5.

Die Aufgabe der Steuervorrichtung 1 besteht dabei darin, den aus einem Fahrerwunsch nach Bereitstellung eines Bremsmomentes bestimmter Größe erforderlichen Druck einzustellen, zu steuern oder zu regeln. Unter Steuervorrichtung wird dabei die Gesamtheit aus Steuergeräten und Stellgliedern, einschließlich der Verbindungen zwischen diesen verstanden. Desweiteren sind mindestens eine Einrichtung zur Vorgabe eines Fahrerwunsches nach Bereitstellung bzw. Erzeugung eines Bremsmomentes bestimmter Größe, im allgemeinen ein vom Fahrer bedienbares Betätigungselement 6 und Übertragungselemente, beispielsweise in Form eines Betätigungsstößels 7, welcher mit einem Bremswertgeber 8 gekoppelt ist, vorgesehen.
Der erste, elektro-peumatische Bremskreis 3 umfaßt eine Steuereinrichtung 9 und einen Druckregelmodul 10. Die Funktion des Druckregelmoduls 10 besteht darin, den am Betriebsbremszylinder erforderlichen Druck einzuregeln. Das Druckregelmodul 10 ist hinsichtlich seiner Funktion zwischen der Steuereinrichtung 9 und dem Betriebsbremszylinder angeordnet. Der Druckregelmodul 10 umfaßt mindestens eine elektro-pneumatisch steuerbare Ventileinrichtung 11 mit wenigstens einer Steuerkammer und einer Arbeitskammer, welche mit einem, hier im einzelnen nicht dargestellten Betriebsbremszylinder koppelbar ist. Die Steuereinrichtung 9 kann dabei in Form eines Steuergerätes ausgeführt sein. Der erste pneumatische Bremskreis 4 umfaßt eine mechanisch betätigbare Betriebsbremsventileinrichtung 12, umfassend eine Arbeitskammer, die mit dem Betriebsbremszylinder koppelbar ist. Erfindungsgemäß wird ein Druckkreis 13 im Normalbetrieb als elektropneumatischer Bremskreis 3 und bei Ausfall der Elektronik als pneumatischer Bremskreis 4 betrieben.Die Funktionen der elektro-pneumatisch steuerbaren Ventileinrichtung 11 und der Betriebsbremsventileinrichtung 12 und ihrer Anschlüsse werden in einer ersten Ventileinrichtung 14 in Form einer kombinierten elektro-pneumatisch oder mechanisch betätigbaren Ventileinrichtung zusammengefaßt. Diese ist im Gehäuse 15 der kombinierten elektro-pneumatisch und mechanisch betätigbaren Ventilbaueinheit angeordnet und umfaßt einen Ventilsitz bzw. ein Ventilsitzelement 16 und ein Ventilglied 17. Ventilglied 17 und das den Ventilsitz 16 tragende Element sind in einer ersten Kammer 19 im Gehäuse 15 koaxial zueinander angeordnet und verschiebbar, insbesondere gegeneinander, geführt. Das Ventilglied 17 wird von einem Manschettenteil 20, welcher als manschettentragendes Kolbenelement 21 in Form eines Doppelkolbens ausgeführt ist, und der die erste Kammer 19 in eine Steuerkammer 22 und eine Arbeitskammer 23 unterteilt, gebildet. Das Manschettenteil 20 ist zu diesem Zweck druckdicht im Gehäuse 15 geführt.
Die Arbeitskammer 23 entspricht dabei der Arbeitskammer der elektro-pneumatisch steuerbaren Ventileinrichtung 11 und der Arbeitskammer der Betriebsbremsventileinrichtung 12. Die Steuerkammer 22 bildet funktionsmäßig die Steuerkammer der elektro-pneumatisch steuerbaren Ventileinrichtung 11. Der Arbeitskammer 23 ist ein Anschluß 24 zur Koppelung mit einer Druckmittelquelle oder Druckmittelsenke und ein Anschluß 25 zum Verbraucher, d.h. mindestens einem Bremszylinder zugeordnet. Der Anschluß 25 entspricht somit dem Anschluß der elektro-pneumatisch steuerbaren Ventileinrichtung 11 und dem Anschluß der Betriebsbremsventileinrichtung 12 mit dem Betriebsbremszylinder.
Das Ventilglied 17 ist zwischen dem Anschluß 24 zur Koppelung mit einer Druckmittelquelle und der Arbeitskammer 23 angeordnet und druckdicht im Gehäuse 15 geführt. Bei Ausführung des Ventilgliedes 17 als Manschettenteil 20 in Form eines Doppelkolbens umfaßt dieses zwei miteinander gekoppelte Kolbenteile - ein erstes Kolbenteil 26 und ein zweites Kolbenteil 27. Die druckdichte Führung der beiden Kolbenteile 26 und 27 erfolgt zumindest an den äußeren Gehäuseinnenwänden 28.
Die einzelnen Kolbenteile 26 und 27 können dabei als separate Bauelemente, welche im Einbauzustand miteinander verbunden werden, ausgeführt werden oder aber von einer integralen Baueinheit gebildet werden. Eine an der Stirnfläche des ersten Kolbenteils 26 ausgebildete Kolbenfläche 29 ist zur Arbeitskammer 23 gerichtet, während eine an der vom Manschettenteil 20 weggerichteten Stirnseite ausgebildete Kolbenfläche 30 des zweiten Kolbenteiles 27 zur Steuerkammer 22 gerichtet ist. Die Arbeitskammer 23 ist über die im Kolbenelement 21 integrierte Manschette 31 mit der Druckmittelquelle oder Druckmittelsenke verbunden. Diese ist zwischen den beiden Kolbenteilen 26 und 27 koaxial zu diesen angeordnet und in der ersten Kammer 19 parallel zum Kolbenelement 21, insbesondere der Führung der Kolbenteile 26 und 27 verschiebbar. Zu diesem Zweck sind die beiden Kolbenteile 26 und 27 hinsichtlich ihrer Abmessungen der Kolbenflächen 29 und 30 unterschiedlich ausgeführt.
Während das zweite Kolbenteil 27 dicht gegenüber der Steuerkammer 22 im Gehäuse 15 verschiebbar und parallel zur Betätigungsrichtung der Betätigungseinrichtung 6 geführt ist, vorzugsweise an der Gehäuseinnenwand 28 und einem speziell im inneren der Ventilbaueinheit dafür vorgesehenen Innenwandelement 32, ist das erste Kolbenteil 26 direkt nur an der Gehäuseinnenwand 28 druckdicht verschiebbar geführt, erstreckt sich bis in den Bereich des Innenwandelementes 32, und wird aufgrund der Koppelung mit dem zweiten Kolbenteil 27 am Innenwandelement 32 geführt und gedichtet. Zwischen beiden Kolbenteilen 26 und 27 ist zur Sperrung oder Freigabe der Verbindung der Arbeitskammer 23 mit der Druckmittelquelle oder Druckmittelsenke die Manschette 31 angeordnet. Das Kolbenelement 21 ist derart ausgeführt, daß Druckmittel über einen Zwischenraum 33 zwischen beiden Kolbenteilen 26 und 27 oder bei integraler Bauweise zwischen den voneinander weggerichteten Kolbenflächen 29 und 30 über eine in das Kolbenelement 21 eingearbeitete Verbindungsleitung oder einen Verbindungskanal zur Arbeitskammer 23 führbar ist. Das Kolbenelement 21 ist dabei derart in der ersten Kammer 19 angeordnet, daß dieses entsprechend den einzelnen Funktionsstellungen eine Verbindung zwischen dem Anschluß 24 und der Arbeitskammer 23 über eine Öffnung in der Wand des Gehäuses 15 und die miteinander zusammenwirkenden Elemente der ersten Ventileinrichtung 14 ermöglicht.
Zur Realisierung der mechanischen Drucksteuerung über den ersten Bremskreis 4 bei pneumatischer Betätigung ist es erforderlich, den Druck in der Arbeitskammer 23 entsprechend der Betätigung der Betätigungseinrichtung 6 einzustellen. Dabei wirkt im dargestellten Fall die Betätigungseinrichtung 6 über Übertragungselemente auf die erste Ventileinrichtung 14, insbesondere den Ventilsitz 16 zur Steuerung der Druckzufuhr zum Arbeitsraum 23.

Die Betätigung der ersten Ventileinrichtung 14 erfolgt dabei im Betrieb des ersten, bei elektro-pneumatischer Betätigung über das Kolbenelement 21 und im ersten, mechanisch-pneumatischen Bremskreis 4 zumindest indirekt über die Betätigungseinrichtung 6, d.h. über ein mit diesem gekoppeltes Übertragungselement. Bezüglich der konkreten Ausführung bestehen mehrere Möglichkeiten. Die Mittel zur pneumatischen Drucksteuerung im ersten Druckkreis 13 umfassen einen mit dem Betätigungselement 6 beziehungsweise dem Betätigungsstößel 7 gekoppelten Pedalkraftkolben 34, welcher am Ventilsitz 16 der Ventileinrichtung 14 wirksam wird und damit die Druckzufuhr zum Arbeitsraum 23 steuert. Pedalkraftkolben 34 und Ventilsitz 16 sind koaxial zur Betätigungsachse des Betätigungsstößels 7 angeordnet. Der Pedalkraftkolben 34 ist in einer zweiten Kammer 39 im Gehäuse 15 angeordnet. Diese ist über eine Zwischenwand 36 und den durch diese geführten Ventilsitz 16 von der ersten Kammer 19 getrennt. Der Pedalkraftkolben 34 stützt sich über mindestens eine Federeinheit 37 an der Zwischenwand 36 ab.

Zur Steuerung des zweiten pneumatisch betätigten Bremskreises 5 ist eine zweite Ventileinrichtung 38 im Gehäuse 15 vorgesehen. Diese ist in einer dritten Kammer angeordnet. Die zweite Ventileinrichtung 38 umfaßt eine Steuerkammer 41 und eine Arbeitskammer 40, welche von einem Ventilsitzelement 42 und einem Ventilglied 43 gebildet werden, die koaxial zueinander angeordnet und in Richtung der Längsachse des Gehäuses 15 zueinander verschiebbar sind. Der zweite pneumatisch betätigte Bremskreis 5 nutzt dabei einen zweiten Druckkreis 44. Die zweite Ventileinrichtung 38 weist dazu einen weiteren zweiten Anschluß 45 zur Kopplung mit einer Druckmittelquelle oder Druckmittelsenke und einen zweiten Anschluß 46 zur Kopplung mit einem Betriebsbremszylinder auf. Das Ventilglied 43 der zweiten Ventileinrichtung ist zwischen dem Anschluß 45 zur Kopplung mit einer Druckmittelquelle oder Druckmittelsenke und der Arbeitskammer 40 angeordnet. Beide - Ventilglieder 17 bzw. 43 der ersten und zweiten Ventileinrichtung 14 und 38 sind koaxial zueinander angeordnet. Dabei ist erfindungsgemäß des weiteren die Arbeitskammer 23 der ersten Ventileinrichtung 14 mit der Steuerkammer 41 der zweiten Ventileinrichtung 38 zur Druckbeaufschlagung verbunden.

Der Ventilsitz 42 der zweiten Ventileinrichtung 38 ist im Gehäuse 15 geführt. Zur Realisierung einer mechanischen Durchsteuerung bei Ausfall des ersten Druckkreises 13 weist das Ventilsitzelement 42 der zweiten Ventileinrichtung 38 eine zur Betätigungseinrichtung 6, insbesondere dem Betätigungsstößel 7 gerichtete Verlängerung 47 auf, welche einen Anschlag oder eine Anlenkfläche für ein mit der Betätigungseinrichtung 6 oder dem Betätigungsstößel 7 gekoppeltes Übertragungselement oder von einer Verlängerung gebildet wird, und die bei Betätigung der Betätigungseinrichtung bei Drucklosigkeit des ersten Druckkreises eine Verschiebung des Betätigungselementes in Richtung des Ventilsitzes und durch dieses eine Mitnahme des zweiten Ventilsitzelementes 42 der zweiten Ventileinrichtung 38 ermöglicht.

Die Vorgabe eines Fahrerwunsches zur Erzeugung eines bestimmten Bremsmomentes erfolgt über ein entsprechendes Betätigungselement 6, welches entweder direkt oder über einen Betätigungsstößel 7 mit einem Bremswertgeber 8 gekoppelt ist. Der Bremswertgeber 8 ist mit einem Pedalkraftkolben 34 verbunden, welcher auf seiner zur Betätigungseinrichtung 6 entgegengesetzt ausgerichteten Fläche 48 mit einem Gegendruck beaufschlagbar ist. Dabei wird am Bremswertgeber 8 eine, den Fahrerwunsch nach Erzeugung eines bestimmten Bremsmomentes wenigstens mittelbar beschreibende Größe, welche beispielsweise in Form eines Weges, eines Winkels oder eines Druckes erfaßt werden kann, als elektrisches Signal generiert, welches der elektronischen Steuereinrichtung 9 an einem Eingang 49 zuführbar ist. Aus dem Fahrerwunsch wird der am Betriebsbremszylinder erforderliche Druck ermittelt und entsprechende Stellgrößen zur Einstellung des Druckes an der elektronischen Steuereinrichtung 9 erzeugt und ausgegeben. Im dargestellten Fall sind ein Spannungs-/Druckwandler 50 und zwei Steuerventileinrichtungen - eine erste Steuerventileinrichtung 51.1 zur elektromagnetischen Steuerung des pneumatischen Druckes in der Steuerkammer (22) und eine zweite Steuerventileinrichtung 51.2 zur elektromagnetischen Steuerung des pneumatischen Druckes in der Steuerkammer (41) - vorgesehen. Beide Ventileinrichtungen sind als 2/2-Wegeventil ausgeführt. Die Steuerung beziehungsweise Betätigung der Steuerventileinrichtungen erfolgt elektromagnetisch, in dem an den Ausgängen 52.1 beziehungsweise 52.2 der elektronischen Steuereinrichtung 9 entsprechende Stellsignale zur Beaufschlagung der Stelleinrichtungen 53.1 beziehungsweise 53.2 der Steuerventileinrichtungen 51.1 beziehungsweise 51.2 ausgegeben werden. Die erste Steuerventileinrichtung 51.1 dient dabei der Kopplung zwischen der Verbindung zwischen der Druckmittelquelle 24 und der Steuerkammer 22. Die zweite Steuerventileinrichtung 51.2 dient der Kopplung zwischen Steuerkammer 22 und einem Entlastungsraum, insbesondere Schalldämpfer 54 oder der Umgebung.

Die erste Funktionsstellung I_{51.1} der ersten Steuerventileinrichtung 51.1 dient dabei der Steuerung des Druckes auf beiden Seiten des Kolbenelementes 21, insbesondere in der Steuerkammer 22. Die zweite Stellung II_{51.1} der ersten Steuerventileinrichtung 51.1 dient dabei dem Halten der Drücke an beiden Kolbenflächen 29 und 30 des Kolbens 21. Die zweite Steuerventileinrichtung 51.2 dient der Verminderung des Druckes in der Steuerkammer 22, welcher auf die zweite Kolbenfläche 30 wirkt. Diese wird über eine Druckentlastungseinrichtung in Form eines Schalldämpfers 54 entlastet. Die Bewegbarkeit von Ventilsitz 16 und Ventilglied 17 parallel zur Betätigungsachse der Betätigungseinrichtung 6, d.h. zur theoretisch verlängerten Achse der an der Ventilbaueinheit wirkenden Kraft, welche über das Betätigungselement 6 aufgebracht wird, wird durch diesen zugeordnete Anschläge 56 begrenzt. Diese können am Ventilsitz 16, dem Ventilglied 17 oder aber an der Innenwand 28 des Gehäuses 15 angeordnet sein. Im dargestellten Fall sind der Anschlag 56 am Ventilsitz 16 und der Anschlag an der Gehäuseinnenwand 28 angeordnet. Beide begrenzen jeweils die Bewegbarkeit des ihnen zugeordneten Elementes - Ventilsitz 16 oder Ventilkolben 17 - in Richtung des Gehäuses 15.

Ventilsitz 16 und Ventilglied 17 sowie die Gehäusewand 28 und Innenwandelement 32, an welcher das zweite Kolbenteil 27 geführt ist, sind derart zueinander angeordnet und ausgelegt, daß bei Wirkverbindung zwischen Ventilsitz 16 und Ventilglied 17 ein Anschluß 57 bzw. die Verbindung zwischen Arbeitskammer 23 und Entlastungsraum 54 versperrt sind. Dazu ist beispielsweise das Innenwandelement 32 derart ausgeführt, daß dieses sich in die erste Kammer 19 hineinerstreckt, jedoch nicht über deren gesamte Abmessung hinweg, so daß auch die Möglichkeit einer teilweisen Führung des Ventilsitzelementes 16 um das Innenwandelement 32 gegeben ist. Das Ventilsitzelement 16 ist zu diesem Zweck als in Richtung des Ventilgliedes 17 offenes Kolbenelement ausgeführt.

Der Druckaufbau im ersten Druckkreis 13 gestaltet sich wie folgt:
Beim elektro-pneumatischen Druckaufbau über den elektro-pneumatischen Bremskreis 3 wird bei Vorliegen eines Fahrerwunsches nach Erzeugung eines bestimmten Bremsmomentes am Bremswertgeber 8 ein entsprechendes Signal für die elektronische Steuereinrichtung 9 generiert wird, welche wiederum über den Spannungs-/Druckwandler 50 und die Steuerventileinrichtungen 51.1, 51.2 zur elektromagnetischen Steuerung des pneumatischen Druckes in der Steuerkammer (22) und der Steuerkammer (41) den Druck in der Steuerkammer 22 einsteuert. Der Druck in der Steuerkammer 22 wirkt dabei auf die von der Arbeitskammer 23 weggerichtete Kolbenfläche 30 am Kolbenteil 27 und somit auf den Doppelkolben. Die koaxial zum Doppelkolben angeordnete und verschiebbar geführte Manschette 31 stützt sich vorzugsweise über mindestens eine Federeinheit 59 am zweiten Kolbenteil 27 ab. Die aufgrund des Druckes in der Steuerkammer 22 bewirkte Verschiebung am Ventilglied 17, insbesondere dem Kolbenelement 21 führt bei Kontaktierung der Manschette 31 mit dem Ventilsitz 16 zu einer Verschiebung der Manschette 31 gegenüber dem ersten und dem zweiten Kolbenteil 26, 27 und damit zur Herstellung einer leitenden Verbindung zwischen dem Anschluß 24 zur Kopplung mit der Druckmittelquelle und dem Arbeitsraum 23 über den Zwischenraum 33 im Manschettenteil 20. Das den Ventilsitz 16 tragende Element ist dabei derart ausgebildet, daß dieses einen entsprechenden Druckmittelstrom zur Arbeitskammer 23 zuläßt und des weiteren einen Übertritt von der Arbeitskammer 23 zum Betriebsbremszylinder am Anschluß 25 ermöglicht.

Desweiteren wird über mindestens eine Durchgangsöffnung 60 in der Zwischenwand 36 die entgegen der Betätigungsrichtung der Betätigungseinrichtung 6 gerichtete Kolbenfläche 48 des Pedalkraftkolbens 37 mit dem Druck in der Arbeitskammer 23 beaufschlagt. Der Fahrer erhält durch die Gegenkraft am Pedalkraftkolben 34 somit ein Feedback bezüglich der erzielten Bremswirkung. Der Ventilsitz 16 ist am Pedalkraftkolben 34 verschiebbar geführt. In diesem Zustand befindet sich der Ventilsitz 16 in seiner von Seiten der Betätigungseinrichtung 6 unbeaufschlagten Stellung. In dieser stützt er sich über eine Federeinheit 61 in der zweiten Kammer 39 an der Zwischenwand 37 ab. Der Anschlag 56 begrenzt dessen Bewegbarkeit in Richtung zweite Kammer 39.

Auch bei elektro-pneumatischer Teilbremsung erfolgt über den Bremswertgeber 8 eine Generierung eines entsprechenden Signales für die elektronische Steuervorrichtung 9 und damit der Bereitstellung eines zur Erzeugung des geforderten Druckes erforderlichen Steuerdruckes in der Steuerkammer 22. Dieser bewirkt, daß das Kolbenelement 21 sich in Richtung einer Erhöhung des Druckes in der Arbeitskammer 23 bewegt. Dabei bewegt sich die Manschette 31 in Richtung des Ventilsitzes 16. Eine Kopplung zwischen Arbeitskammer 23 und Druckmittelquelle erfolgt jedoch nicht, da aufgrund der Nichtbetätigung der Manschette 31 über den Zwischenraum 33 aus der Druckmittelquelle kein Druckmittel in den Arbeitsraum 23 eingebracht werden kann.

Zur mechanischen Teil- und Vollbetätigung befindet sich das Ventilglied 17 am Anschlag, d.h. in seiner gegenüber der äußeren Gehäuseinnenwand 28 äußersten Position. Die Teilbetätigung bewirkt, daß der mit dem Betätigungselement 6 beziehungsweise dem Betätigungsstößel 7 gekoppelte Pedalkraftkolben 34 durch die Kraft am Betätigungsstößel 7 beaufschlagt wird und gegenüber dem den Ventilsitz 16 bildenden Element verschoben wird, was aufgrund der begrenzten Führung des Ventilsitzes 16 im Pedalkraftkolben 34 bis vor einen, am den Ventilsitz 16 bildenden Element vorgesehenen Anschlag 62 möglich ist. Bei Kontaktierung des Anschlages 62 wird dann der Ventilsitz 16 bzw. das den Ventilsitz bildende Element ebenfalls mitgenommen. Diese Verschiebung erfolgt dabei in Richtung des Manschettenteiles 20, insbesondere in Richtung der Manschette 31 und bis zu dieser, wobei eine Betätigung, insbesondere Verschiebung der Manschette 31 noch nicht erfolgt. Erst bei weiterer Beaufschlagung von Pedalkraftkolben 34 und damit der Herstellung der Zwangsführung zwischen Pedalkraftkolben 34 und Ventilsitz 16 in Richtung des Manschettenteiles 20 und Wirkung des Ventilsitzes 16 auf die Manschette 31 im Sinne einer Verschiebung oder Auslenkung erfolgt durch Herstellung einer Druckmittelverbindung zwischen der Druckmittelquelle und dem Arbeitsraum 23 beziehungsweise dem mit dem Betriebsbremszylinder gekoppelten Auslaß 25 eine Druckbereitstellung für den Betriebsbremszylinder. Die Betätigung erfolgt dabei rein mechanisch und der Druckaufbau rein pneumatisch.

In beiden Betriebsweisen des ersten Druckkreises 13 wird in der zweiten Ventileinrichtung 38 das Ventilsitzelement 42 mit dem Druck aus der Arbeitskammer 23 der ersten Ventileinrichtung beaufschlagt. Dazu ist die Arbeitskammer 23 mit der Steuerkammer 41 über mindestens eine Verbindungsleitung 58 verbunden. Diese kann außerhalb des Gehäuses 15 oder aber in der Gehäusewand geführt werden. Der Begriff Verbindungsleitung ist dabei derart allgemein zu verstehen, daß sowohl in andere Bauelemente oder Wände eingearbeitete Kanäle als auch elastische oder starre Leitungsverbindungen darunter zu subsumieren sind.

Bei Beaufschlagung des Ventilsitzelementes 42 der zweiten Ventileinrichtung 38 wird dieses gegenüber der das Ventilglied bildenden Manschette 43 verschoben und damit eine Freigabe zwischen zweitem Anschluß 45 zur Koppelung mit einer Druckmittelquelle oder Senke und Arbeitsraum 40 ermöglicht. Um in der kombinierten Ventilbaueinheit auch die Funktion der mechanischen Durchsteuerung zu integrieren, ist das Ventilsitzelement 38 als Doppelkolben 63 ausgeführt, dessen erstes, zur Steuerkammer 41 gerichteter Kolbenteil 64 druckdicht im Gehäuse 15, insbesondere an der Gehäuseinnenwand 28 und dem Innenwandelement 32 und der zweite, zur Arbeitskammer 40 gerichtete Kolbenteil 65, welcher auch den Ventilsitz bildet, direkt nur an der Gehäuseinnenwand 28 druckdicht geführt ist, jedoch eine zentral, durch das Innenwandelement 32 erstreckende Verlängerung 47 aufweist, welche sich derart weit über die erste Kammer 19 erstreckt, daß bei Betätigung des Betätigungselementes 6 und damit des Betätigungsstößels 7 und Bewegung dessen bzw. eines mit diesem gekoppelten Elementes in Betätigungsrichtung, beispielsweise des Pedalkraftkolbens 34 das Ventilsitzelement 42 in dieser Richtung mitgenommen wird.

Im unbetätigten Zustand, welcher durch den Abbau des Druckes in der Ventilbaueinheit charakterisiert ist, befinden sich die Ventilsitze der ersten und zweiten Ventileinrichtung 14, 38 in den Positionen, welche den unbelasteten Zustand beschreiben. Ventilsitz 16 und Ventilglied der ersten Ventileinrichtung 14 befinden sich an den ihnen im Gehäuse 15 zugeordneten Anschlägen 56 und stehen nicht miteinander in Wirkverbindung. Die Entfernung zwischen beiden ist maximal. In diesem Zustand gibt der Ventilsitz die Verbindung 57 zwischen Arbeitsraum 23 und Entlastungsraum 54 frei. Der Druckabbau erfolgt beispielsweise von der Arbeitskammer 23 in den Entlastungsraum in Form des Schalldämpfers 54. Desweiteren bewirkt der im System noch vorhandene Druck eine Verschiebung von entlastetem Pedalkraftkolben 34 in seine Ausgangslage. Die Manschette 31 wird über die vorgespannte Federeinheit 59 und der Ventilsitz 16 wird über die Federeinheit 61 in ihrer Ausgangslage gehalten. Gleichzeitig wird im zweiten Druckkreis 44 das Ventilsitzelement 42 gegenüber der Gehäuseinnenwand 28 über eine, zwischen Ventilsitzelement 42 und Gehäuseinnenwand 28 in der Arbeitskammer 40 angeordnete Federeinheit 66 in seiner Lage gehalten. Dabei wird der Übergang zwischen Arbeitskammer 40 und Entlastungsraum 54 freigegeben. Das zweite Kolbenteil 65 des Ventilsitzelementes ist dabei als in Richtung der Manschette 43 geöffneter Kolben ausgeführt, der das Innenwandelement 32 wenigstens teilweise bei Verschiebung in Umfangsrichtung umschließt.

### Bezugszeichenliste

- 3: elektro-pneumatisch ansteuerbarer erster Bremskreis
- 4: mechanisch-pneumatisch ansteuerbarer erster Bremskreis
- 5: zweiter mechanisch-pneumatischer Bremskreis
- 6: Betätigungselement
- 7: Betätigungsstößel
- 8: Bremswertgeber
- 9: Steuereinrichtung, Steuergerät
- 10: Druckregelmodul
- 11: elektro-pneumatisch steuerbare Ventileinrichtung
- 12: Betriebsbremsventil
- 13: erster Druckkreis
- 14: erste Ventileinrichtung
- 15: Gehäuse
- 16: Ventilsitz
- 17: Ventilglied
- 19: erste Kammer
- 20: Manschettenteil
- 21: Kolbenelement
- 22: Steuerkammer
- 23: Arbeitskammer
- 24: Anschluß der ersten Ventileinrichtung zur Kopplung mit Druckmittelquelle oder Druckmittelsenke
- 25: Anschluß der ersten Ventileinrichtung zum Verbraucher
- 26: erster Kolbenteil
- 27: zweiter Kolbenteil
- 28: äußere Gehäuseinnenwand
- 29: Kolbenfläche
- 30: Kolbenfläche
- 31: Manschettenteil
- 32: Innenwandelement
- 33: Zwischenraum
- 34: Pedalkraftkolben
- 36: Zwischenwand
- 37: Federeinheit
- 38: zweite Ventileinrichtung
- 39: zweite Kammer
- 40: Arbeitskammer
- 41: Steuerkammer
- 42: Ventil
- 43: Ventilglied
- 44: zweiter Druckkreis
- 45: Anschluß der zweiten Ventileinrichtung zur Koppelung mit einer Druckmittelquelle oder Druckmittelsenke
- 46: Anschluß der zweiten Ventileinrichtung zur Koppelung mit einem Betriebsbremszylinder
- 47: Anschlag
- 48: Fläche
- 49: Eingang
- 50: Spannungs-/Druckwandler
- 51.1: erste Steuerventileinrichtung
- 51.2: zweite Steuerventileinrichtung
- 52.1: Ausgang
- 52.2: Ausgang
- 53.1: Stelleinrichtung
- 53.2: Stelleinrichtung
- 54: Schalldämpfer
- 56: Anschlag
- 57: Anschluß
- 58: Verbindungsleitung
- 59: Federeinheit
- 60: Durchgangsöffnung
- 61: Federeinheit
- 62: Anschlag
- 63: Doppelkolben
- 64: erstes Kolbenteil
- 65: zweites Kolbenteil
- 66: Federeinheit

## Patentansprüche

1. Kombinierte elektro-pneumatisch und mechanisch betätigbare Ventilbaueinheit für Bremssysteme mit mindestens zwei Bremskreisen, wobei ein erster elektro-pneumatischer Bremskreis (3, 4) im Normalbetrieb elektropneumatisch betätigt wird und zur Sicherheit bei Ausfall der Elektronik zusätzlich auch pneumatisch betätigt werden kann und ein zweiter Bremskreis (5) ausschließlich pneumatisch betätigt wird, **gekennzeichnet durch** folgende Merkmale :
1.1 eine in einer ersten Kammer (19) eines Gehäuses (15) angeordnete erste Ventileinrichtung (14) für den ersten elektro-pneumatisch betätigten Bremskreis (3) und den ersten pneumatischen Bremskreis (4) und eine zweite, in einer dritten Kammer des Gehäuses (15) angeordnete Ventileinrichtung (38) für den zweiten pneumatischen Bremskreis (5) sind vorgesehen;
1.2 die erste Ventileinrichtung (14) für den ersten elektro-pneumatisch betätigten Bremskreis (3), der bei Ausfall der Elektronik als pneumatischer Bremskreis (4) betrieben wird, umfasst
- eine Arbeitskammer (23) und eine Steuerkammer (22);
- einen Anschluss (24) zur Kopplung mit einer Druckmittelquelle oder Druckmittelsenke und einen Anschluss (25) zur Kopplung der Arbeitskammer (23) mit mindestens einem Betriebsbremszylinder;
- ein indirekt über weitere Übertragungselemente oder direkt mit einer Betätigungseinrichtung (6) koppelbares Ventilsitzelement (16) und ein Ventilglied (17), welches entsprechend seiner Funktionsstellung die Verbindung zwischen der Arbeitskammer (23) und dem Anschluss (24) zur Kopplung mit einer Druckmittelquelle oder Druckmittelsenke frei gibt oder versperrt, wobei
- das Ventilsitzelement (16) und das Ventilglied (17) koaxial zueinander im Gehäuse (15) angeordnet und in Richtung der Längsachse des Gehäuses (15) zueinander verschiebbar sind;
- dem Ventilsitzelement (16) und dem Ventilglied (17) Anschläge (56) zur Begrenzung von deren Verschiebbarkeit im Gehäuse (15) zugeordnet sind;
1.3 die zweite Ventileinrichtung (38) umfasst
- eine Steuerkammer (41) und eine Arbeitskammer (40);
- ein Ventilsitzelement (42) und ein Ventilglied (43), die koaxial zueinander angeordnet und in Richtung der Längsachse des Gehäuses (15) zueinander verschiebbar sind;
- einen Anschluss (45) zur Kopplung mit einer Druckmittelquelle oder Druckmittelsenke und einen Anschluss (46) zur Kopplung mit einem Betriebsbremszylinder, wobei das Ventilglied (43) zwischen dem Anschluss (45) zur Kopplung mit einer Druckmittelquelle oder Druckmittelsenke und der Arbeitskammer (40) angeordnet ist; wobei
1.4 die Arbeitskammer (23) der ersten Ventileinrichtung (14) mit der Steuerkammer (41) der zweiten Ventileinrichtung (38) verbunden ist;
1.5 das Ventilsitzelement (42) der zweiten Ventileinrichtung (38) im Gehäuse (15) geführt und mit dem Betätigungselement (6) direkt oder über Übertragungselemente zur Verschiebung in Wirkverbindung bringbar ist.

2. Kombinierte elektro-pneumatisch und mechanisch betätigbare Ventilbaueinheit nach Anspruch 1, **gekennzeichnet durch** die folgenden Merkmale :
2.1 das Ventilglied (17) der ersten Ventileinrichtung (14) ist als Manschettenteil (20) ausgebildet;
2.2 das Ventilglied (17) umfasst einen Doppelkolben mit zwei druckdicht im Gehäuse (15) geführten Kolbenteilen (26, 27) und integrierter Verbindungsleitung und/oder einen integrierten Zwischenraum (33) und mindestens eine an einem Kolbenteil (26, 27) geführte und koaxial zu diesem angeordnete Manschette (31) zur wahlweisen Freigabe oder Verschluss der Verbindung zwischen dem ersten Anschluss (24) mit einer Druckmittelquelle oder einer Druckmittelsenke und dem Arbeitsraum (23).

3. Kombinierte elektro-pneumatisch und mechanisch betätigbare Ventilbaueinheit nach Anspruch 2, **dadurch gekennzeichnet, dass** der Doppelkolben als integrale Baueinheit mit eingearbeiteten Zwischenraum (33) ausgeführt ist.

4. Kombinierte elektro-pneumatisch und mechanisch betätigbare Ventilbaueinheit nach einem der Ansprüche 2 oder 3, **dadurch gekennzeichnet, dass** die Manschette (31) gegenüber dem Kolbenteil (26, 27) über eine Federeinheit (59) abgestützt ist.

5. Kombinierte elektro-pneumatisch und mechanisch betätigbare Ventilbaueinheit nach einem der Ansprüche 2 bis 4, **gekennzeichnet durch** die folgenden Merkmale:
5.1 das zweite Kolbenteil (27) begrenzt mit seiner zur Gehäuseinnenwand (28) gerichteten Stirnseite die Steuerkammer (22), der erste Kolbenteil (26) begrenzt die Arbeitskammer (23);
5.2 der erste Kolbenteil (26) ist im Bereich seines Außendurchmessers direkt in der äußeren Gehäuseinnenwand (28) und im Bereich seines Innendurchmessers über eine Koppelung mit dem zweiten Kolbenteil (27) im Gehäuse (15) geführt;
5.3 die Manschette (31) ist am zweiten Kolbenteil (27) parallel zu diesem verschiebbar geführt und liegt in mindestens einer Funktionsstellung am ersten Kolbenteil (26) im Bereich von dessen Innendurchmesser druckdicht zur Sperrung der Verbindung zwischen Anschluss (24) und Arbeitskammer (23) an.

6. Kombinierte elektro-pneumatisch und mechanisch betätigbare Ventilbaueinheit nach einem der Ansprüche 1 bis 5, **gekennzeichnet durch** die folgenden Merkmale:
6.1 die zweite Ventileinrichtung (38) ist in der weiteren dritten Kammer im Gehäuse (15) angeordnet,
6.2 die Verbindung zwischen der Arbeitskammer (23) der ersten Ventileinrichtung (14) und der Steuerkammer (41) der zweiten Ventileinrichtung (38) erfolgt **durch** eine in der Gehäuseinnenwand (28) eingearbeiteten Verbindungsleitung.

7. Kombinierte elektro-pneumatisch und mechanisch betätigbare Ventilbaueinheit nach einem der Ansprüche 1 bis 5, **gekennzeichnet durch** die folgenden Merkmale:
7.1 die zweite Ventileinrichtung (38) ist in der weiteren dritten Kammer im Gehäuse (15) angeordnet,
7.2 die Verbindung zwischen der Arbeitskammer (23) der ersten Ventileinrichtung (14) und der Steuerkammer (41) der zweiten Ventileinrichtung (38) erfolgt **durch** eine am Gehäuse geführten Verbindungsleitung (58).

8. Kombinierte elektro-pneumatisch und mechanisch betätigbare Ventilbaueinheit nach einem der Ansprüche 1 bis 7, **dadurch gekennzeichnet, dass** das Ventilsitzelement (42) der zweiten Ventileinrichtung (38) zentral geführt ist und eine Verlängerung umfasst, die sich bis in die erste Ventileinrichtung (14) hineinerstreckt und bei Betätigung des Betätigungselementes (6) mitgeführt wird.

9. Kombinierte elektro-pneumatisch und mechanisch betätigbare Ventilbaueinheit nach einem der Ansprüche 1 bis 8, **gekennzeichnet durch** die folgenden Merkmale:
9.1 im Gehäuse (15) ist eine zweite Kammer (39) vorgesehen;
9.2 in der zweiten Kammer (39) ist ein mit dem Betätigungselement (6) koppelbarer Pedalkraftkolben (34) angeordnet;
9.3 der Pedalkraftkolben (34) ist koaxial zu den Ventilgliedern (17, 43) und Ventilsitzelementen (16, 42) der ersten und zweiten Ventileinrichtung (14, 38) angeordnet;
9.4 der Pedalkraftkolben (34) stützt sich über eine Federeinheit (37) im Gehäuse (15) ab;
9.5 das Ventilsitzelement (16) der ersten Ventileinrichtung (14) ist am Pedalkraftkolben (34) verschiebbar geführt;
9.6 der Pedalkraftkolben (34) und/oder das Ventilsitzelement (16) bilden einen Anschlag (62) zur Mitnahme des Ventilsitzelementes (16) der ersten Ventileinrichtung (14) und einen weiteren zweiten Anschlag zur Mitnahme des Ventilsitzelementes (42) der zweiten Ventileinrichtung (38).

10. Kombinierte elektro-pneumatisch und mechanisch betätigbare Ventilbaueinheit nach Anspruch 9, **gekennzeichnet durch** die folgenden Merkmale:
10.1 die erste Kammer (19) und die zweite Kammer (39) werden im Gehäuse (15) **durch** eine Zwischenwand (36) begrenzt;
10.2 das Ventilsitzelement (16, 17) oder deren Verlängerungen der ersten und zweiten Ventileinrichtung (14, 38) sind **durch** die Zwischenwand (36) geführt;
10.3 zwischen Zwischenwand (36) und Ventilsitzelement (16) der ersten Ventileinrichtung (14) ist mindestens eine Federeinheit (61) vorgesehen.

11. Kombinierte elektro-pneumatisch und mechanisch betätigbare Ventilbaueinheit nach einem der Ansprüche 9 oder 10, **dadurch gekennzeichnet, dass** mindestens eine Verbindung zwischen der Arbeitskammer (23) der ersten Ventileinrichtung (14) und der zweiten Kammer (39) über Öffnungen (60) in der Zwischenwand (36) oder separate Leitungen außerhalb des Gehäuses (15) zur Beaufschlagung des Pedalkraftkolbens (34) mit einem Druck entgegen der Betätigungsrichtung vorgesehen ist.

12. Kombinierte elektro-pneumatisch und mechanisch betätigbare Ventilbaueinheit nach einem der Ansprüche 1 bis 11, **gekennzeichnet durch** die folgenden Merkmale :
12.1 ein Anschluss (57) der ersten Ventileinrichtung (14) und ein Anschluss der zweiten Ventileinrichtung (38) zur Koppelung mit einem Entlastungsraum (54) sind vorgesehen;
12.2 die Ventilsitzelemente (16, 42) und Ventilglieder (17, 43) der ersten und zweiten Ventileinrichtung (14, 38) sind derart ausgeführt und ausgelegt, dass in einem Funktionszustand, welcher **durch** den Nichtkontakt jeweils der beiden Elemente charakterisiert ist eine Verbindung zwischen dem Arbeitsraum (23, 40) und dem Entlastungsraum (54) freigegeben wird.

13. Steuervorrichtung (1) für ein Bremssystem mit mindestens zwei Bremskreisen, wobei ein erster Bremskreis (3, 4) im Normalbetrieb elektropneumatisch betätigt wird und zur Sicherheit bei Ausfall der Elektronik zusätzlich auch pneumatisch betätigt werden kann und ein zweiter Bremskreis (5) ausschließlich pneumatisch betätigt wird, **dadurch gekennzeichnet, dass**
13.1 ein Bremswertgeber (8) und ein mit diesem gekoppeltes Betätigungselement (6) zur Vorgabe des Fahrerwunsches nach Bereitstellung eines Bremsmomentes bestimmter Größe vorgesehen sind;
13.2 der erste elektro-pneumatische Bremskreis (3), der bei Ausfall der Elektronik als pneumatischer Bremskreis betrieben wird, eine Steuereinrichtung (9) und einen Druckregelmodul (10) mit mindestens einer elektropneumatisch steuerbaren Ventileinrichtung (11, 14) umfasst;
13.3 der erste pneumatische Bremskreis (4) eine mechanisch betätigbare Betriebsbremsventileinrichtung (12) umfasst;
13.4 der zweite pneumatische Bremskreis (5) eine mechanisch betätigbare Betriebsbremsventileinrichtung umfasst;
13.5 die steuerbare Ventileinrichtung (11) des ersten Bremskreises (3) und die Betriebsbremsventileinrichtung (12) des ersten Bremskreises in einer elektro-pneumatisch oder mechanisch betätigbaren ersten Ventileinrichtung (14) zusammengefasst sind;
13.6 die mechansich betätigbare Ventileinrichtung des zweiten pneumatischen Bremskreises (5) von einer zweiten Ventileinrichtung (38) gebildet wird;
13.7 die erste und zweite Ventileinrichtung (14, 38) zu einer kombinierten elektro-pneumatisch und mechanisch betätigbaren Ventilbaueinheit gemäß einem der Ansprüche 1 bis 12 zusammengefasst sind.

14. Steuervorrichtung (1) für ein Bremssystem nach Anspruch 13, **dadurch gekennzeichnet, dass** die Steuereinrichtung (9), der Bremswertgeber (8) und die kombinierte elektro-pneumatisch oder mechanisch betätigbare Ventilbaueinheit zu einer baulichen Einheit zusammengefasst sind.

15. Steuervorrichtung (1) für ein Bremssystem nach Anspruch 13, **dadurch gekennzeichnet, dass** die Steuereinrichtung (9), der Bremswertgeber (8) und die kombinierte elektro-pneumatisch und die mechanisch betätigbare Ventilbaueinheit in unmittelbarer räumlicher Nähe zueinander angeordnet sind.

16. Steuervorrichtung (1) für ein Bremssystem nach einem der Ansprüche 13 oder 14, **dadurch gekennzeichnet, dass** die Steuereinrichtung (9), der Bremswertgeber (8) und die kombinierte elektro-pneumatisch und mechanisch betätigbare Ventilbaueinheit in einem Gehäuse angeordnet sind.

17. Steuervorrichtung (1) für ein Bremssystem nach einem der Ansprüche 13 bis 15, **dadurch gekennzeichnet, dass** die Steuereinrichtung (9), der Bremswertgeber (8) und die kombinierte elektro-pneumatisch und mechanisch betätigbare Ventilbaueinheit an ihren Gehäusen aneinander angeflanscht sind.

## Claims

1. Combined electro-pneumatically and mechanically operable valve assembly for brake systems including at least two brake circuits, wherein a first electro-pneumatic brake circuit (3,, 4) is electro-pneumatically operated in normal operation and is adapted for additional pneumatic operation, too, for safety in the event of failure of the electronic system, and wherein a second brake circuit (5) is pneumatically operated exclusively, **characterised by** the following features:
1.1 a first valve means (14), which is arranged in a first chamber (19) of a housing (15), is provided for said first electro-pneumatically operated brake circuit (3) and said first pneumatic brake circuit (4), and a second valve means (38), which is disposed in a third chamber of said housing (15), is provided for said second pneumatic brake circuit (5);
1.2 said first valve means (14) for said first electro-pneumatically operated brake circuit (3), which is actuated as pneumatic brake circuit (4) in the case of failure of the electronic system, comprises
- a working chamber (23) and a control chamber (22);
- a connector (24) for connection to a source of compressed-medium or a drain of compressed-medium, and a connector (25) for connecting said working chamber (23) to at least one service brake cylinder;
- a valve seat element (16) adapted to be connected indirectly via further transmission elements or directly to an actuator means (6) and a valve member (17) that establishes or inhibits, in correspondence with its functional position, the connection between said working chamber (23) and said connector (24) for connection to a source of compressed-medium or a drain of compressed medium,
with
- said valve seat element (16) and said valve member (17) being arranged in coaxial relationship relative to each other in said housing (15) and being adapted for displacement relative to each other in a direction along the longitudinal axis of said housing (15),
- stops (56) being associated with said valve seat element (16) and said valve member (17) for limiting their displaceability in said housing (15);
1.3 said second valve means (38) comprises
- a control chamber (41) and a working chamber (40);
- a valve seat element (42) and a valve member (43) arranged in coaxial relationship relative to each other and adapted for displacement in a direction along the longitudinal axis of said housing (15);
- a connector (45) for connection to a source of compressed-medium or a drain of compressed-medium and a connector (46) for connection to a service brake cylinder, with said valve member (43) being arranged between said connector (45) for connection to a source of compressed-medium or a drain of compressed-medium and said working chamber (40); wherein
1.4 said working chamber (23) of said first valve means (14) is connected to said control chamber (41) of said second valve means (38);
1.5 said valve seat element (42) of said second valve means (38) is guided in said housing (15) and adapted to be carried into an operative connection directly or via transmission elements.

2. Combined electro-pneumatically and mechanically operable valve assembly according to Claim 1, **characterised by** the following features:
2.1 said valve member (17) of said first valve means (14) is configured in the form of a collar element (20);
2.2 said valve m ember (17) comprises a double piston including two piston parts (26, 27) guided in said housing (15) in a manner tight in terms of pressure as well as an integrated connecting pipe and/or an integrated space (33) and at least one collar (31) guided on one piston part (26, 27) in coaxial relationship with the latter for selectively releasing or closing the connection between said first connector (24) with a source of compressed-medium or a drain of compressed-medium and said working chamber (23).

3. Combined electro-pneumatically and mechanically operable valve assembly according to Claim 2, **characterised in that** said double piston is configured in the form of an integral assembly including a space (33) incorporated therein.

4. Combined electro-pneumatically and mechanically operable valve assembly according to a ny of the Claims 2 or 3, **characterised in that** said collar (31) is supported via a spring assembly (59) relative to said piston part (26, 27).

5. Combined electro-pneumatically and mechanically operable valve assembly according to any of the Claims 2 to 4, **characterised by** the following features:
5.1 said second piston part (27) limits, by its face oriented towards the inner wall of said housing (28), said control chamber (22) whilst said first piston part (26) limits said working chamber (23);
5.2 in the zone of its outer diameter, said first piston part (26) is arranged directly in the outside inner wall (28) of said housing and, in the zone of its inner diameter, it is arranged in said housing (15) via a connector coupling it to said piston part (27);
5.3 said collar (31) is arranged on said second piston part (27) for displacement in parallel to the latter and bears, in at least one functional position, against said first piston part (26) in the zone of the inner diameter of the latter in a manner tight in terms of pressure so as to inhibit the connection between said connector (24) and said working chamber (23).

6. Combined electro-pneumatically and mechanically operable valve assembly according to any of the Claims 1 to 5, **characterised by** the following features:
6.1 said second valve means (38) is arranged in said further third chamber in said housing (15);
6.2 the connection between said working chamber (23) of said first valve means (14) and said control chamber (41) of said second valve means (38) is established through a connecting pipe incorporated into the inner wall (28) of said housing.

7. Combined electro-pneumatically and mechanically operable valve assembly according to any of the Claims 1 to 5, **characterised by** the following features:
7.1 said second valve means (38) is disposed in said further third chamber in said housing (15);
7.2 the connection between said working chamber (23) of said first valve means (14) and said control chamber (41) of said second valve means (38) is established through a connecting pipe (58) placed along said housing.

8. Combined electro-pneumatically and mechanically operable valve assembly according to any of the Claims 1 to 7, **characterised in that** said valve seat element (42) of said second valve means (38) is centrally arranged and includes an extension that extends up to a point in said first valve means (14) and that is also guided when said actuator element (6) is operated.

9. Combined electro-pneumatically and mechanically operable valve assembly according to any of the Claims 1 to 8, **characterised by** the following features:
9.1 a second chamber (39) is provided in said housing (15);
9.2 a pedal force piston (34) is arranged in said second chamber (39), which is adapted to be coupled to said actuator element (6);
9.3 said pedal force piston (34) is arranged coaxially relative to said valve members (17, 43) and said valve seat elements (16, 42) of said first and second valve means (14, 38);
9.4 said pedal force piston (34) is supported via a spring assembly (37) in said housing (15);
9.5 said valve seat element 16) of said first valve means (14) is guided on said pedal force piston (34) for displacement;
9.6 said pedal force piston (34) and/or said valve seat element (16) constitute a stop (62) for driving said valve seat element (16) of said first valve means (14) and a further second stop for driving said valve seat element (42) of said second valve means (38).

10. Combined electro-pneumatically and mechanically operable valve assembly according to Claim 9, **characterised by** the following features:
10.1 said first chamber (19) and said second chamber (39) are defined by a partitioning wall (36) in said housing (15);
10.2 said valve seat element (16, 17) or their extensions of said first and second valve means (14, 38) are passed through said partitioning wall (36);
10.3 at least one spring assembly (61) is provided between said partitioning wall (36) and said valve seat element (16) of said first valve means (14).

11. Combined electro-pneumatically and mechanically operable valve assembly according to any of the Claims 9 or 10, **characterised in that** at least one connection is provided between said working chamber (23) of said first valve means (14) and said second chamber (39) via openings (60) in said partitioning wall (36) or via separate pipes outside said housing (15) so as to act upon said pedal force piston (34) with a pressure opposing the direction of actuation.

12. Combined electro-pneumatically and mechanically operable valve assembly according to any of the Claims 1 to 11, **characterised by** the following features:
12.1 a connector (57) of said first valve means (14) and a connector of said second valve means (38) are provided for connection to a relief volume (54);
12.2 said valve seat elements (16; 42) and valve members (17, 43) of said first and second valve means (14, 38) are configured and designed in such a way that, in a functional state **characterised by** the non-contact of a respective one of the two elements, a connection is released between said working chamber (23, 40) and said relief volume (54).

13. Control device (1) for a brake system including at least two brake circuits, with a first brake circuit (3, 4) being electro-pneumatically operated in normal operation and is adapted for additional pneumatic operation, too, for safety in the case of failure of the electronic system, wherein a second brake circuit (5) is pneumatically operated exclusively, **characterised in that**
13.1 a brake force level generator (8) and an actuator element (6) coupled to it are provided for predetermination of the driver's option that a brake application momentum should be made available in a certain magnitude;
13.2 said first electro-pneumatic brake circuit (3), which is operated as pneumatic brake circuit in the case of failure of the electronic system, comprises a control means (9) and a pressure regulator module (10) with at least one electro-pneumatically controllable valve means (11, 14);
13.3 said first pneumatic brake circuit (4) includes a mechanically operable service brake valve means;
13.5 said controllable valve means (11) of said first brake circuit (3) and said service brake valve means (12) of said first brake circuit are combined in an electro-pneumatically or mechanically operable first valve means (14);
13.6 said mechanically operable valve means of said second pneumatic brake circuit (5) is constituted by a second valve means (38);
13.7 said first a nd second valve means (14, 38) are combined to form an integral electro-pneumatically and mechanically operable valve assembly according to any of the Claims 1 to 12.

14. Control device (1) for a brake system according to Claim 13, **characterised in that** said control means (9), said brake force level generator (8) and said combined electro-pneumatically or mechanically operable valve assembly are integrated to form a single structural assembly.

15. Control device (1) for a brake system according to Claim 13, **characterised in that** said control means (9), said brake force level generator (8) and said combined electro-pneumatically and mechanically operable valve assembly are arranged in immediate geometric proximity relative to each other.

16. Control device (1) for a brake system according to any of the Claims 13 or 14, **characterised in that** said control means (9), said brake force level generator (8) and said combined electro-pneumatically and mechanically operable valve assembly are arranged in a housing.

17. Control device (1) for a brake system according to any of the Claims 13 to 15, **characterised in that** said control means (9), said brake force level generator (8) and said combined electro-pneumatically and mechanically operable valve assembly are flanged to each other on their housings.

## Revendications

1. Ensemble soupape combiné à commande électropneumatique et mécanique pour systèmes de freinage renfermant au moins deux circuits de freinage, dans lequel un premier circuit de freinage (3,, 4) électropneumatique est commandé, par force électropneumatique, en état normal de fonctionnement, et est apte aussi à fonctionner en régime pneumatique additionnel en mesure de sécurité au cas défaillance du système électronique, et dans lequel un deuxième circuit de freinage (5) st commandé seulement en régime pneumatique, **caractérisé par** les caractéristiques suivantes:
1.1 un premier moyen à soupape (14), qui est disposé dans une première chambre (19) d'un carter (15), est disposé pour ledit premier circuit de freinage (3) commandé en régime électropneumatique et ledit premier circuit de freinage (4) pneumatique, et un deuxième moyen à soupape (38), qui est disposé dans une troisième chambre dudit carter (15), est disposé pour ledit deuxième circuit de freinage (5) pneumatique;
1.2 ledit premier moyen à soupape (14) pour ledit pour ledit premier circuit de freinage (3) commandé en régime électropneumatique, qui est commandé en tant que circuit de freinage (4) pneumatique au cas de défaillance du système électronique, comprend
- une chambre de travail (23) et une chambre de commande (22);
- un raccord (24) pour le raccordement à une source de milieu comprimé ou à un drain de milieu comprimé, et un raccord (25) pour le raccordement de ladite chambre de travail (23) à au moins un cylindre de frein à service ;
- un élément siège de soupape (16) apte à être raccordé indirectement via des autres organes de transmission ou directement à un moyen acteur (6) et un élément de soupape (17), qui établit ou arrête, en correspondance avec sa position fonctionnelle, le raccord entre ladite chambre de travail (23) et ledit raccord (24) pour la connexion à une source de milieu comprimé ou à un drain de milieu comprimé,
dans lequel
- ledit élément siège de soupape (16) et ledit élément de soupape (17) sont disposés en un arrangement coaxial l'un relativement à l'autre dans ledit carter (15) et sont apte à se déplacer, l'un relativement à l'autre, en un sens le long de l'axe longitudinal dudit carter (15),
- aux butées (56) étant affectées audit élément siège de soupape (16) et audit élément de soupape (17) afin de limiter leur capacité de déplacement dans ledit carter (15);
1.3 ledit deuxième moyen à soupape (38) comprend
- une chambre de commande (41) et une chambre de travail (40);
- un élément siège de soupape (42) et un élément de soupape (43), qui sont disposés en un arrangement coaxial l'un relativement à l'autre et qui sont apte à se déplacer en un sens de long de l'axe longitudinal dudit carter (15) ;
- un raccord (45) pour le raccordement à une source de milieu comprimé ou à un drain de milieu comprimé et un raccord (46) pour le raccordement à un cylindre de frein de service, audit élément de soupape (43) étant disposé entre ledit raccord (45) pour le raccordement à une source de milieu comprimé ou à un drain de milieu comprimé et ladite chambre de travail (40); dans lequel
1.4 ladite chambre de travail (23) dudit premier moyen à soupape (14) est relié à ladite chambre de commande (41) dudit deuxième moyen à soupape (38);
1.5 ledit élément siège de soupape (42) dudit deuxième moyen à soupape (38) est guidé dans ledit carter (15) et est apte à être porté en une connexion opérative directement ou via des organes de transmission.

2. Ensemble soupape combiné à commande électropneumatique et mécanique selon la revendication 1, **caractérisé par** les caractéristiques suivantes:
2.1 ledit élément de soupape (17) dudit premier moyen à soupape (14) est configuré sous forme d'un élément manchon (20);
2.2 ledit élément de soupape (17) comprend un double piston renfermant deux parties de piston (26, 27) guidées dans ledit carter (15) d'une manière étanche aux pressions ainsi qu'un tube de raccord intégré et/ou un espace intégré (33) et au moins un manchon (31) guidé à une partie de piston (26, 27) en arrangement coaxial relativement au dernier afin de dégager ou arrêter la connexion entre ledit premier raccord (24) à une source de milieu comprimé ou à un drain de milieu comprimé et ladite chambre de travail (23).

3. Ensemble soupape combiné à commande électropneumatique et mécanique selon la revendication 2, **caractérisé en ce que** ledit double piston est configuré sous forme d'un ensemble intégral, qui renferme un espace (33) y incorporé.

4. Ensemble soupape combiné à commande électropneumatique et mécanique selon une quelconque des revendications 2 ou 3, **caractérisé en ce que** ledit manchon (31) est appuyé via un ensemble à ressort (59) relativement à ladite partie de piston (26, 27).

5. Ensemble soupape combiné à commande électropneumatique et mécanique selon une quelconque des revendications 2 à 4, **caractérisé par** les caractéristiques suivantes:
5.1 ladite deuxième partie de piston (27) limite, par son côté de face orienté vers la paroi intérieure dudit carter (28), ladite chambre de commande (22) pendant que ladite première partie de piston (26) limite ladite chambre de travail (23);
5.2 dans la zone de son diamètre extérieur, ladite première partie de piston (26) est disposée directement dans la paroi intérieure externe (28) dudit carter et, dans la zone de son diamètre intérieur, elle est disposé dans ledit carter (15) via un raccord pour sa connexion à ladite partie de piston (27);
5.3 ledit manchon (31) est disposé à ladite deuxième partie de piston (27) pour son déplacement en parallèle à la dernière et porte, en au moins une position fonctionnelle, contre ladite première partie de piston (26) dans la zone du diamètre intérieur du dernier d'une manière étanche aux pressions afin d'arrêter le raccordement entre ledit raccord (24) et ladite chambre de travail (23).

6. Ensemble soupape combiné à commande électropneumatique et mécanique selon une quelconque des revendications 1 à 5, **caractérisé par** les caractéristiques suivantes:
6.1 ledit deuxième moyen à soupape (38) est disposé dans ladite autre troisième chambre dans ledit carter (15);
6.2 le raccord entre ladite chambre de travail (23) dudit premier moyen à soupape (14) et ladite chambre de commande (41) dudit deuxième moyen à soupape (38) est établi via un tube de raccord, qui est incorporé dans ladite paroi intérieure (28) dudit carter.

7. Ensemble soupape combiné à commande électropneumatique et mécanique selon une quelconque des revendications 1 à 5, **caractérisé par** les caractéristiques suivantes:
7.1 ledit deuxième moyen à soupape (38) est disposé dans ladite autre troisième chambre dans ledit carter (15);
7.2 le raccord entre ladite chambre de travail (23) dudit premier moyen à soupape (14) et ladite chambre de commande (41) dudit deuxième moyen à soupape (38) est établi via un tube de raccord (58) placé le long dudit carter.

8. Ensemble soupape combiné à commande électropneumatique et mécanique selon u ne quelconque des revendications 1 à 7, **caractérisé en ce que** ledit élément siège de soupape (42) dudit deuxième moyen à soupape (38) est disposé de manière centrale et renferme un prolongement, qui s'étend jusqu'à un point dans ledit premier moyen à soupape (14) et qui est également guidé, quand ledit élément acteur (6) est commandé.

9. Ensemble soupape combiné à commande électropneumatique et mécanique selon une quelconque des revendications 1 à 8, **caractérisé par** les caractéristiques suivantes:
9.1 une deuxième chambre (39) est formée dans ledit carter (15);
9.2 un piston d'effort de pédale (34) est disposé dans ladite deuxième chambre (39), qui est apte à être raccordé audit élément acteur (6) ;
9.3 ledit piston d'effort de pédale (34) est disposé en arrangement coaxial relatif auxdits éléments de soupape (17, 43) et lesdits éléments siège de soupape (16, 42) desdits premier et deuxième moyens à soupape (14, 38);
9.4 ledit piston d'effort de pédale (34) s'appuie via un ensemble à ressort (37) dans ledit carter (15);
9.5 ledit élément siège de soupape (16) dudit premier moyen à soupape (14) est guidé audit piston d'effort de pédale (34) pour son déplacement ;
9.6 ledit piston d'effort de pédale (34) et/ou ledit élément siège de soupape (16) constituent une butée (62) à entraîner ledit élément siège de soupape (16) dudit premier moyen à soupape (14) et une autre deuxième butée à entraîner ledit élément siège de soupape (42) dudit deuxième moyen à soupape (38).

10. Ensemble soupape combiné à commande électropneumatique et mécanique selon la revendication 9, **caractérisé par** les caractéristiques suivantes:
10.1 ladite première chambre (19) et ladite deuxième chambre (39) sont définies par un cloison de séparation (36) dans ledit carter (15);
10.2 ledit élément siège de soupape (16, 17) ou ses prolongements desdits premier et deuxième moyens à soupape (14, 38) sont passés à travers ledit cloison de séparation (36);
10.3 au moins un ensemble à ressort (61) est disposé entre ledit cloison de séparation (36) et ledit élément siège de soupape (16) dudit premier moyen à soupape (14).

11. Ensemble soupape combiné à commande électropneumatique et mécanique selon une quelconque des revendications 9 ou 10, **caractérisé en ce qu'**au moins un raccord est formé entre ladite chambre de travail (23) dudit premier moyen à soupape (14) et ladite deuxième chambre (39) via des ouvertures (60) dans ledit cloison de séparation (36) ou via des tubes séparés du côté extérieur dudit carter (15) afin d'agir sur ledit piston d'effort de pédale (34) à une pression opposée au sens de commande.

12. Ensemble soupape combiné à commande électropneumatique et mécanique selon une quelconque des revendications 1 à 11, **caractérisé par** les caractéristiques suivantes:
12.1 un raccord (57) dudit premier moyen à soupape (14) et un raccord dudit deuxième moyen à soupape (38) sont disposé pour le raccord à un volume de détente (54);
12.2 ledit élément siège de soupapes (16; 42) et des éléments de soupape (17, 43) desdits premier et deuxièmes moyens à soupape (14, 38) sont configurés et conçus d'une telle manière, qu'en un état fonctionnel **caractérisé par** le non contact d'un éléments respectif des deux éléments, un raccord est dégagés entre ladite chambre de travail (23, 40) et ledit volume de détente (54).

13. Dispositif de commande pour un système de freinage comprenant au moins deux circuits de freinage, à un premier circuit de freinage (3, 4) étant commandé en régime électropneumatique en état normal de fonctionnement et étant capable d'un fonctionnement en régime pneumatique supplémentaire aussi afin d'assurer la sécurité au cas de défaillance du système électronique, dans lequel un deuxième circuit de freinage (5) est commandé en régime pneumatique seulement, **caractérisé en ce**
13.1 qu'un ajusteur de l'effort de freinage (8) et un élément acteur (6) y accouplé sont disposés afin de prédéterminer l'option du conducteur, qu'un moment de freinage soit rendu disponible à un certain niveau ;
13.2 ledit premier circuit de freinage électropneumatique (3), qui est commandé en tant que circuit de freinage pneumatique au cas de défaillance du système électronique, comprend un moyen de commande (9) et un module régulateur de pression (10) à au moins un moyen à soupape à commande électropneumatique (11, 14);
13.3 ledit premier circuit de freinage (4) pneumatique comprend des moyens à soupape de frein de service commandables en régime mécanique ;
13.5 ledit moyen à soupape commandable (11) dudit premier circuit de freinage (3) et ledit moyen à soupape de frein de service (12) dudit premier circuit de freinage sont combinés en un premier moyen à soupape à commande en régime électropneumatique ou mécanique (14);
13.6 ledit moyen à soupape à commande mécanique dudit deuxième circuit de freinage pneumatique (5) est constitué par un deuxième moyen à soupape (38);
13.7 lesdits premier et deuxième moyens à soupape (14, 38) sont combinés de manière à constituer un ensemble soupape intégral à commande électropneumatique et mécanique selon une quelconque des revendications 1 à 12.

14. Dispositif de commande pour un système de freinage selon la revendication 13, **caractérisé en ce que** ledit moyen de commande (9), ledit ajusteur de l'effort de freinage (8) et ledit ensemble soupape combiné à commande électropneumatique ou mécanique sont intégrés d'une manière à constituer un seul ensemble structurel.

15. Dispositif de commande pour un système de freinage selon la revendication 13, **caractérisé en ce que** ledit moyen de commande (9), ledit ajusteur de l'effort de freinage (8) et ledit ensemble soupape combiné à commande électropneumatique et mécanique sont disposés à proximité directe géométrique l'un relativement à l'autre.

16. Dispositif de commande pour un système de freinage selon une quelconque des revendications 13 ou 14, **caractérisé en ce que** ledit moyen de commande (9), ledit ajusteur de l'effort de freinage (8) et ledit ensemble soupape combiné à commande électropneumatique et mécanique sont disposés dans une boîte.

17. Dispositif de commande pour un système de freinage selon une quelconque des revendications 13 à 15, **caractérisé en ce que** ledit moyen de commande (9), ledit ajusteur de l'effort de freinage (8) et ledit ensemble soupape combiné à commande électropneumatique et mécanique sont bridés l'un à l'autre à leurs carters.
